Europäisches Patentamt

(19) European Patent Office                    (11) Publication number: **0 122 260**

Office européen des brevets                                              **B1**

(12) EUROPEAN PATENT SPECIFICATION

(45) Date of publication of patent specification: **26.04.89**      (51) Int. Cl.⁴: **F 16 J 3/04**

(21) Application number: **82903568.2**

(22) Date of filing: **22.10.82**

(86) International application number:
**PCT/US82/01519**

(87) International publication number:
**WO 84/01609 26.04.84 Gazette 84/11**

(54) HIGH PRESSURE BELLOWS CAPSULE AND METHOD OF MAKING SAME.

(43) Date of publication of application:
**24.10.84 Bulletin 84/43**

(45) Publication of the grant of the patent:
**26.04.89 Bulletin 89/17**

(84) Designated Contracting States:
**DE FR GB NL SE**

(56) References cited:
**DE-A-2 121 489**
**DE-A-2 258 090**
**US-A-1 341 669**
**US-A-1 717 196**
**US-A-2 534 123**
**US-A-2 682 893**
**US-A-3 090 403**
**US-A-3 224 344**
**US-A-3 482 302**
**US-A-3 831 499**
**US-A-3 861 277**

(73) Proprietor: **METAL BELLOWS CORPORATION**
**1075 Providence Highway**
**Sharon MA 02067 (US)**

(72) Inventor: **SHAMIE, Raymond**
**8 Tetreault Drive**
**Walpole, MA 02081 (US)**

(74) Representative: **Endlich, Fritz, Dipl.-Phys.**
**Postfach 1326 Blumenstrasse 8**
**D-8034 Germering (DE)**

## Description

### Background of the invention

This invention relates to a nesting metal bellows enclosure for use in applications where the pressure on the outside of the bellows is sometimes substantially higher than the pressure at the inside thereof, and to a method of making same.

Bellows capsules are used in a wide variety of applications as pressure transducers, linear actuators, temperature and pressure responsive devices, etc. In many cases, the bellows capsule is composed of a series of annular rippled diaphragms whose alternate inner and outer edges are welded, brazed or otherwise secured to the corresponding edges of adjacent diaphragms to form a series of bellows convolutions (DE—A—2 121 489).

In the application of particular interest here, the bellows capsule is situated inside a pressure vessel. One end of the capsule is closed while its other end is connected to a header in the vessel to isolate the spaces inside the pressure vessel at the inside and outside of the bellows. Further, fluid communication is provided through the header into the bellows and through the wall of the pressure vessel to the space inside the vessel but outside the bellows. When fluid under high pressure is injected into the pressure vessel, it tends to compress or collapse the bellows capsule so that the rippled diaphragms nest against one another, the fluid inside the bellows then being expelled through the header. Conversely, when the pressure in the vessel is reduced relative to the pressure inside the capsule, the capsule tends to extend, drawing fluid into the capsule.

It has been found that when a conventionally fabricated, nesting welded bellows is subjected to repeated high pressure stress upon assuming its fully nested position, diaphragm fatigue occurs within a relatively few pressure cycles. It is believed that this diaphragm fatigue stems from excessive strain of small unsupported annular portions of the bellows diaphragms forming each bellows convolution near the inner edges of the diaphragms. These diaphragm portions are unsupported because the widths of the joints, i.e. the weld beads or spillover, between the bellows diaphragms at the inner and outer diameters of the capsule are wider than twice the diaphragm thickness. Consequently when the bellows is compressed, adjacent beads contact one another preventing the bellows diaphragms from nesting completely at those portions and leaving a small space in each convolution.

Since these diaphragm portions "see" high pressure on one side and low pressure on the other, they are bowed or bent toward each other into the intervening space thus producing pressure cycling fatigue. In actual practice, this fatigue occurs within only a relatively few pressure cycles on the capsule. Consequently, such capsules used in high pressure applications have a relatively short life. Many of the capsules with which we are particularly concerned here are used in aircraft and aerospace applications. Also, they are often made of expensive metals, such as stainless steel, titanium, etc. Thus it is important that they be made more reliable and long-lived both for cost and safety reasons.

It is possible to avoid the spillover problem by connecting the diaphragm edges together by brazing them. However, this involves inserting a thin ring of different metal between the diaphragms which melts forming the bond. In many applications, the use of this different brazing metal creates manufacturing problems. Also corrosion occurs because of electrolytic action. Consequently in such applications, it has been found necessary to weld the diaphragms together.

Also it is known that weld beads such as those found on conventional bellows can be removed by coining. This entails smashing the bead between a hammer and an anvil to flatten the bead. This can be accomplished relatively easily at the joints between the diaphragm pairs at the inside diameter of the bellows. This is because each such diaphragm pair is a separate unit so that there is ready access to both sides of the weld bead. However, it is very difficult and not economically feasible to coin the weld beads at the outside diameter of the bellows because the bellows is already formed at this point and the individual weld beads cannot easily be segregated from the adjacent beads for the coining operation.

Also it is known to include a spacer ring at the inner edges or outer rims (DE—A—2 258 090). However, by the disclosed designs true conformal nesting cannot be achieved.

### Summary of the invention

Accordingly, the present invention aims to provide a bellows capsule which is particularly effective in high pressure applications.

Another object is to provide a bellows capsule whose adjacent convolutions are able to nest completely.

A further object of the invention is to provide a nesting, rippled, welded diaphragm bellows which is able to withstand repetitive high pressure stresses for a prolonged period.

A further object of the invention is to provide a method of making a metal bellows capsule having one or more of the aforesaid advantages.

Other objects will, in part, be obvious and will, in part, appear hereinafter.

The invention accordingly comprises the several steps and the relation of one or more of such steps with respect to each of the others, and the article possessing the features, properties and relation of elements which are exemplified in the following detailed disclosure, and the scope of the invention will be indicated in the claims.

Briefly, the present bellows capsule is able to withstand repeated cyclings to a fully compressed position in a high pressure environment because it is fabricated so as to leave no unsupported diaphragm portions that are exposed to high pressure when the capsule is fully nested. This is accomplished by sandwiching a flat spacer ring between the inner edges of the bellows diaphragms forming adjacent bellows convolutions. For purposes of this disclosure, a convolution is defined as a segment of the bellows comprising a pair of annular diaphragms joined together at their rims.

Each ring is TIG welded in place at the time the inner edges of the diaphragms of adjacent bellows convolutions are joined. The thickness of the spacer ring is selected to be substantially the same as the added thickness of the weld beads or spillover at the rims of the adjacent bellows convolutions. Consequently, when the bellows is in its fully compressed position, the diaphragms forming each bellows convolution are able to nest against one another providing mutual support across their entire widths. Furthermore, the inner margins of the diaphragms and the spacer rings form a continuous load bearing column that supports the stack of bellows convolutions so that the weld beads at their rims barely contact one another when the bellows is fully nested.

With this arrangement, there are no unsupported portions of the bellows diaphragms subjected to a high pressure differential that are not also fully supported by an adjacent diaphragm portion when the bellow is in its fully compressed position. Resultantly the diaphragms suffer minimum stress when the capsule is subjected to repeated pressure cycling and therefore the capsule should have a long, useful life. Yet the implementation of the present improvement does not result in any material increase in the overall cost of such bellows because the only added components are a plurality of identical flat rings which are easily formed by conventional stamping techniques.

Brief description of the drawing

For a fuller understanding of the nature and objects of the invention, reference should be had to the following detailed description, taken in connection with the accompanying drawing, in which:

Figure 1 is a perspective view of a rippled diaphragm bellows capsule made in accordance with this invention, shown in a high pressure environment;

Figure 2 is a perspective view of the spacer ring incorporated into the Figure 1 capsule;

Figure 3 is a fragmentary sectional view of the Figure 1 capsule on a larger scale showing the capsule in greater detail; and

Figure 4 is a similar view showing the conventional bellows capsule construction (DE—A— 2 121 489).

Description of the preferred embodiments

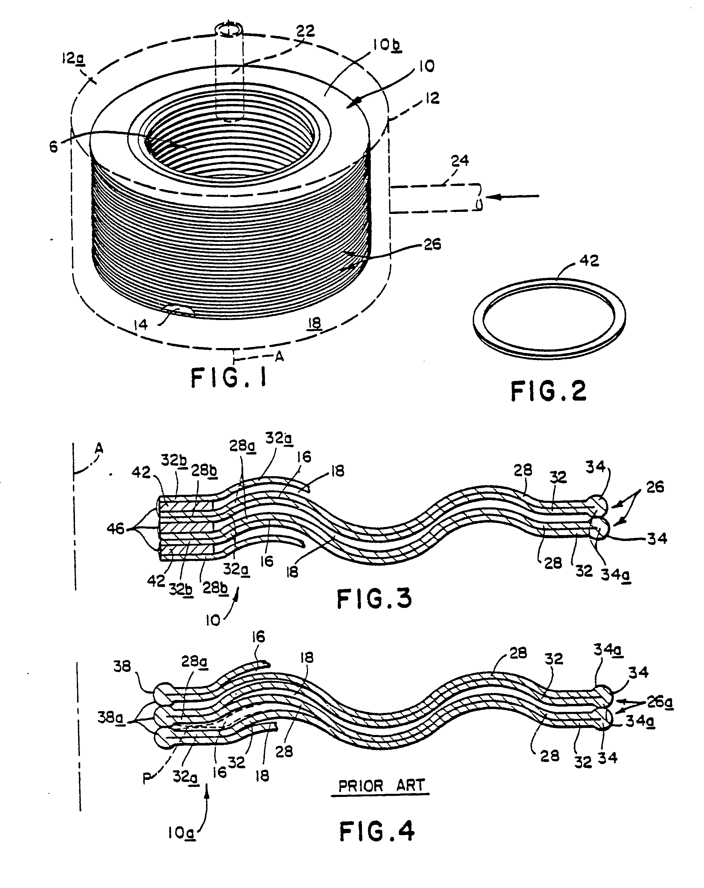

Referring to Figure 1 of the drawing, the subject bellows capsule shown generally at 10 is positioned inside a pressure vessel indicated in dotted lines at 12. The inner end of the capsule is closed by a circular disk 14. The outer end of the capsule has a flange 10b that is welded or otherwise secured to an end wall or header 12a of vessel 12. Thus the capsule 10 divides the volume of vessel 12 into two isolated spaces, namely, a space 16 inside the capsule and a space 18 outside the capsule. In use, fluid communication from without is established to the two spaces 16 and 18 via conduits extending through the walls of vessel 12 as shown in dotted lines at 22 and 24 respectively.

Referring now to Figures 1 and 3, the bellows capsule 10 comprises a series of identical convolutions shown generally at 26. Each convolution comprises a female diaphragm 28 and male diaphragm 32. Typically, bellows diaphragms are made of stainless steel, titanium or other rugged metal and they are rippled so that they flex readily with minimum stress as the capsule is cycled between its fully extended and fully compressed positions.

Figure 3 shows the relative positions of adjacent bellows convolutions 26 when the capsule 10 is in its fully nested or compressed position. Figure 4 illustrates the comparable positions of adjacent convolutions 26a of a prior conventional capsule 10a.

Refer, for a moment to Figure 4. In prior bellows of this general type, each bellows convolution 26a consists of a pair of nesting, rippled female and male diaphragms 28 and 32. Each convolution is formed by joining the outer edges or rims of diaphragms 28 and 32 usually by TIG welding those edges together. Invariably, this process results in the formation of an annular bead 34 due to spillover of molten metal during the welding process. In a typical case, each weld bead 34 has a cross section which is roughly three times the width of the diaphragm thickness. Thus, each weld bead 34 has a portion 34a that projects out beyond the surface of each diaphragm at the joint in the direction of the bellows axis A, a distance roughly equal to one-half the diaphragm thickness.

Similar weld beads 38 are formed at the inner diameter of the bellows when the diaphragms of adjacent bellows convolutions are joined together in the same manner. These inner weld beads 38 also have portions 38a which project out beyond the surfaces of the diaphragms as shown.

Still referring to Figure 4, when pressure is applied to the outside of capsule 10, the bellows is prevented from nesting completely because the adjacent weld beads 34 and the adjacent weld beads 38 contact one another at the inner and outer diameters of the capsule. The stacking of the weld beads 38 at the inner diameter of the bellows leaves annular diaphragm portions 28a and 32a adjacent those weld beads unsupported. Moreover, the space between those diaphragm portions corresponds to the space 16 (Figure 1) inside the capsule which is maintained at relatively low pressure. On the other hand, the opposite sides of those diaphragm portions 28a and 32a are exposed to the relatively high pressure in the space 18 at the outside of the bellows capsule. Resultantly, when the capsule 10a is fully nested, the pressure differential across those diaphragm portions causes those portions to bulge toward one another into the gap between them as shown in dotted lines at P in Figure 4. As a consequence, the diaphragms suffer fatigue distress at those diaphragm portions 28a and 32a after the bellows capsule 10a has undergone only a relatively few pressure cycles.

Turning now to Figures 2 and 3 of the drawing, the present long-lived bellows capsule 10 is somewhat similar to the prior one in that it is composed of a stack of bellows convolutions formed by connecting rippled female and male diaphragms 28 and 32 alternately at their inner and outer edges. Actually, the joints at the outer rims of the diaphragms are more or less the same as those described above. That is, they are characterized by weld beads 34, having portions 34a projecting out from the surfaces of the diaphragms along the bellows axis A.

The capsule 10 does differ substantially from the prior one, however, in its joints or connections between the inner edges of the diaphragms of adjacent convolutions. In lieu of the usual inner connections that form weld beads 38 (Figure 4), the present capsule 10 has flat spacer rings 42 sandwiched between the diaphragms 28 and 32 of adjacent convolutions 26. The inner diameter of each ring 42 is substantially the same as the diaphragm inner diameter. The ring outer diameter is not particularly critical.

As best seen in Figure 3, when forming the diaphragms 28 and 32, their inner edge margins 28b, 32b are flattened so that when the rings 42 are in position, they lie flush against those edge margins as shown. Each ring 42 is more or less coextensive with those edge margins 28b, 32b and the thickness of each ring is approximately equal to twice the thickness of the weld bead portion 34a. Each pair of diaphragm margins 28b, 32b and the intervening spacer ring 42 are joined by TIG welding as indicated at 46 in Figure 3.

It should be understood that the process of welding the inner joints 46 between the bellows convolutions does itself result in some spillover. However, the extra thickness provided by the ring 42 accommodates most of the molten metal flow as the joint is formed. Resultantly, there is no great flow of metal beyond the edges of the sandwich comprising each inner joint so that the resultant weld bead is relatively small. In any event, the weld beads at the inner joints are easily removed by coining as described above.

With this arrangement, the diaphragm portions 28a and 32a of each convolution 26 inboard of the rings support one another and there is no gap or void between them. In other words, the diaphragms 28, 32 forming each convolution 26 are able to nest completely along their entire width. Consequently, when the space 18 between the bellows convolutions 26 is exposed to high pressure and the space 16 inside the bellows is exposed to a lower pressure, those engaging diaphragm portions 28a and 32a provide mutual support for one another. In fact, there are no portions of the bellows diaphragms that are exposed to a pressure differential that are not also supported by an adjacent diaphragm.

Further as shown in Figure 3, the thickness of each ring 42 is such that when the bellows is fully compressed, the diaphragm margins 28b, 32b and rings 42 form a load bearing column that permits the weld beads 34 at the rims of the convolutions to barely contact one another so that there is little or no distortion at the outer edge margins of the diaphragms. Resultantly, the subject capsule 10 can undergo numerous pressure cycles without suffering fatigue distress.

The spacer rings 42 being simple stamped metal parts add little to the overall cost of the bellows capsule 10. Accordingly, a high pressure capsule of superior performance and long life can be fabricated at a cost not appreciably more than that of prior comparable capsules having lesser performance characteristics.

It will thus be seen that the objects set forth above, among those made apparent from the preceding description, are efficiently attained, and, since certain changes may be made in carrying out the above method and in the construction set forth without departing from the scope of the invention, it is intended that all matter contained in the above description or shown in the accompanying drawing shall be interpreted as illustrative and not in a limiting sense.

## Claims

1. A metal bellows enclosure comprising:

A. a stack of several alternating first and second annular metal diaphragms, each pair of said first and second diaphragms (28, 32) having a generally sinuous central portion and substantially flat inner edges and outer rims, separately dimensioned for intimate abutting contact along the entire radial length thereof;

B. means (34) connecting the rims of each pair of adjacent diaphragms directly to one another; and

C. means for joining the inner edges of each two opposed diaphragms which face each other in each adjacent pair, whereby a series of convolutions (26) is formed with each convolution consisting of two diaphragms, said diaphragms, said means for joining the inner edges and said means for connecting the rims are characterized in that:

said diaphragms (28, 32) are intimately conformal at their mutual interface;

said means (34) for connecting the rims separate each pair of adjacent diaphragms a predetermined distance; and each said joining means consisting of:

(1) a metal spacer ring (42) sandwiched between said inner edges of each said two opposed diaphragms providing support for the bellows when it is compressed, and

(2) means for connecting said inner edges to opposite surfaces of said spacer ring to form continuous seams (46) around the ring, whereby adjacent rims and edges are in abutting contact with said bellows fully compressed.

2. The bellows according to claim 1, wherein the diaphragms (28, 32) are of the rippled nesting type construction.

3. The bellows according to claim 1 or 2, wherein
A. the inner edge margin (28b, 32b) of each diaphragm (28, 32) is substantially flat, and
B. each said spacer ring (42) has substantially flat upper and lower surfaces coextensive with said inner edge margins.

4. The bellows according to claim 1 or 2, wherein each said spacer ring (42) has a thickness such that when the capsule (10) is fully compressed, said inner edges and said ring (42) form a continuous load bearing column that maintains adjacent bellows convolutions in spaced-apart relation.

5. The bellows according to claim 1 or 2, wherein the inner edge of each ring (42) coincides with said inner edges of the diaphragms (28, 32).

6. The bellows according to claim 1 or 2, wherein completely nesting pairs of diaphragms (28, 32) are provided, being in the fully compressed state in contact along their entire width.

7. The bellows according to claim 1 or 2, wherein along the bellows axis (A) the thickness of the outer seams (34) and the spacer rings (42) are such that when adjacent diaphragms of adjacent pairs are in a load bearing contact at the inner edges, the seams (34) at the outer rims of each pair barely contact one another.

8. The method of forming a metal bellows capsule comprising the steps of:
A. providing several pairs of radially mating annular metal diaphragms (28, 32), each diaphragm having a generally sinuous central portion and substantially flat inner edges and outer rims,
B. forming a plurality of metal spacer rings (42) whose inner edge has substantially the same diameter as the inner edges of said diaphragms,
C. securing the rings between the inner edges of each pair of said diaphragms,
D. joining the rings only with the inner edges of each two opposed diaphragms which face each other in adjacent diaphragm pair, and
E. joining the outer rims of the adjacent diaphragms of each pair flush to one another to form a series of convolutions (26) with each convolution consisting of two diaphragms, so that:
when the capsule is fully compressed, the diaphragms in each pair contact one another over their entire areas thereby providing mutual support, and the inner edges and the outer rims of adjacent diaphragms are also able to contact one another
whereby the capsule is able to tolerate relatively high external pressures.

## Patentansprüche

1. Metallbalg mit
A. einem Stapel aus mehreren abwechselnden ersten und zweiten metallischen Ringscheiben, wobei jedes Paar der ersten und zweiten Ringscheiben (28, 32) einen gewellten zentralen Teil und im wesentlichen ebene innere und äußere Ränder aufweist, gesondert dimensioniert für enge Anlage entlang der gesamten radialen Länge davon,
B. einer Verbindung (34), um die äußeren Ränder jedes Paars von angrenzenden Ringschieben direkt miteinander zu verbinden, sowie mit
C. Mitteln zur Vereinigung der inneren Ränder von jeweils zwei gegenüberliegenden Ringscheiben, die in jedem angrenzenden Paar zueinander weisen, wodurch eine Reihe von Balgelementen (26) gebildet wird, von denen jedes Balgelement aus zwei Ringscheiben besteht,
wobei die Ringscheiben, die Mittel zur Vereinigung der inneren Ränder und die Verbindung für die äußeren Ränder dadurch gekennzeichnet sind, daß
die Ringscheiben (28, 32) an ihrer gegenseitigen Zwischenfläche eng konform sind,
die Verbindungen (34) zum Verbinden der äußeren Ränder jedes Paar von angrenzenden Ringscheiben um einen vorherbestimmten Abstand trennen und daß jedes Mittel zur Vereinigung
(1) aus einem metallischen Abstandsring (42) besteht, der zwischen den inneren Rändern der jeweils gegenüberliegenden Ringscheiben eingefügt ist und eine Abstützung des Balgs in dessen zusammengedrücktem Zustand ermöglicht, sowie
(2) aus einer Verbindung zum Verbinden der inneren Ränder mit gegenüberliegenden Oberflächen des Abstandsrings besteht, um kontinuierliche Nähte (46) um den Ring zu bilden, wobei angrenzende Ränder in anliegender Berührung bei vollständig zusammengedrücktem Balg stehen.

2. Balg nach Anspruch 1, wobei die Ringscheiben (28, 32) eine gewellte, eng zusammenpassende Konstruktion aufweisen.

3. Balg nach Anspruch 1 oder 2, wobei
A. der innere Randbereich (28b, 32b) jeder Ringscheibe (28, 32) im wesentlichen eben ist und
B. jeder Abstandsring (42) im wesentlichen ebene Oberseiten und Unterseiten aufweist, die sich gemeinsam mit den inneren Randbereichen erstrecken.

4. Balg nach Anspruch 1 oder 2, wobei jeder Abstandsring (42) eine derartige Dicke hat, daß bei vollständig zusammengedrücktem Balg (10) die inneren Ränder und der Ring (42) eine kontinuierliche lasttragende Säule bilden, die angrenzende Balgelemente in einem Abstand voneinander hält.

5. Balg nach Anspruch 1 oder 2, wobei die Innenkante jedes Rings (42) mit den Innenkanten der Ringscheiben (28, 32) fluchtet.

6. Balg nach Anspruch 1 oder 2, wobei vollständig aneinander anlegbare Ringscheiben (28, 32) vorgesehen sind, die im zusammengedrückten Zustand entlang ihrer gesamten Breite in Berührung stehen.

7. Balg nach Anspruch 1 oder 2, wobei entlang der Balgachse (A) die Dicke der äußeren Nähte (34) und der Abstandsrings (42) derart ausgebildet sind, daß bei einer lasttragenden Berührung angrenzender Ringscheiben von angrenzenden Paaren entlang der inneren Rändern die Nähte (34) an den äußeren Rändern jedes Paars einander nur berühren.

8. Verfahren zur Herstellung eines Metallbalgs, bei dem

A. mehrere Paare von radial aneinander angepaßten metallischen Ringscheiben (28, 32) vorgesehen werden, wovon jede Ringscheibe einen gewellten zentralen Bereich und im wesentlichen flache innere und äußere Ränder aufweist,

B. eine Anzahl von metallischen Abstandsringen (42) gebildet werden, deren innerer Rand im wesentlichen denselben Durchmesser wie die inneren Ränder der Ringscheiben aufweist,

C. die Ringe zwischen den inneren Rändern jedes Paars von Ringscheiben angeordnet werden,

D. die Ringe nur mit den inneren Rändern von jeweils zwei gegenüberliegenden Ringscheiben verbunden werden, die in einem angrenzenden Ringscheibenpaar zueinander weisen, und

E. die äußeren Ränder der angrenzenden Ringscheiben jedes Paars miteinander fluchtend verbunden werden, um eine Reihe von Balgelementen (26) zu bilden, wovon jedes Balgelement aus zwei Ringscheiben besteht, so daß

wenn der Balg vollständig zusammengedrückt wird, die Ringscheiben in jedem Paar einander entlang ihrer gesamten Fläche berühren, um eine gegenseitige Abstützung zu ermöglichen, und die inneren Ränder und die äußeren Ränder angrenzender Ringscheiben ebenfalls in Berührung miteinander gelangen können,

wobei der Balg einem verhältnismäßig hohen äußeren Druck ausgesetzt werden kann.

**Revendications**

1. Capsule métallique en soufflet comportant:

A. une pile de plusieurs, alternativement premiers et seconds, diaphragmes annulaires métalliques, chaque paire de ces premiers et seconds diaphragmes (28, 32) possédant une portion centrale d'une façon générale onduleuse et des bords internes et des rebords extérieurs sensiblement plats, dimensionnés séparément pour un contact en aboutement intime sur toute leur longueur radiale;

B. des moyens (34) pour raccorder directement entre eux les rebords de chaque paire de diaphragmes adjacents; et

C. des moyens pour relier entre eux les bords internes de chacun des deux diaphragmes opposés qui se font face l'un à l'autre dans chaque paire adjacente, ce grâce à quoi est formée une série de circonvolutions (26), avec chaque circonvolution constituée de deux diaphragmes,

ces diaphragmes, ces moyens pour relier entre eux les bords internes et ces moyens pour raccorder les rebords sont caractérisés en ce que:

ces diaphragmes (28, 32) sont intimement conformés sur leur interface mutuel;

ces moyens (34) pour raccorder les rebords séparent chaque paire de diaphragmes adjacents d'une distance prédéterminée; et

chacun de ces moyens de liaison est constitué par:

(1) un anneau d'écartement métallique (42) intercalé entre lesdits bords internes de chacun de ces deux diaphragmes opposés en constituant un support pour le soufflet lorsqu'il est comprimé; et

(2) des moyens pour relier lesdits bords internes aux surfaces en regard dudit anneau d'écartement de façon à former des cordons continus (46) autour de l'anneau, ce grâce à quoi les rebords et bords adjacents sont en contact d'aboutement avec ce soufflet entièrement comprimé.

2. Soufflet selon la revendication 1, dans lequel les diaphragmes (28, 32) sont d'un type de construction ondulée emboitable.

3. Soufflet selon la revendication 1 ou 2, dans lequel:

A. la marge interne (28b, 32b) de chaque diaphragme (28, 32) est sensiblement plate et

B. chaque anneau d'écartement (42) présente des surfaces supérieures et inférieure sensiblement plates de même étendue que lesdites marges internes.

4. Soufflet selon la revendication 1 ou 2, dans lequel chaque anneau d'écartement (42) possède une épaisseur telle que, lorsque la capsule (10) est totalement comprimée, les susdits bords internes et ledit anneau (42) forment une colonne de support de charge continue qui maintient les circonvolutions de soufflet adjacentes (26) écartées les unes des autres.

5. Soufflet selon la revendication 1 ou 2, dans lequel le bord interne de chaque anneau (42) coïncide avec les bords internes des diaphragmes (28, 32).

6. Soufflet selon la revendication 1 ou 2, dans lequel sont prévues des paires complètement emboîtées de diaphragmes (28, 32), à l'état entièrement comprimé en contact le long de la totalité de leur largeur.

7. Soufflet selon la revendication 1 ou 2, dans lequel, le long de l'axe (A) du soufflet, l'épaisseur des cordons externes (34) et les anneaux d'écartement (42) sont tels que, lorsque des diaphragmes adjacents de paires adjacentes sont en contact de support de charge sur leurs bords internes, les cordons (34) des rebords externes de chaque paire sont tout juste en contact l'un avec l'autre.

8. Procédé de fabrication d'une capsule métallique en soufflet comprenant les étapes suivantes:

A. on forme plusieurs paires de diaphragmes métalliques annulaires (28, 32) à accouplement radial, chaque diaphragme possédant une portion centrale d'une façon générale onduleuse et des bords internes et des rebords externes sensiblement plats;

B. on forme plusieurs anneaux métalliques d'écartement (42) dont le bord interne présente pratiquement le même diamètre que les bords internes desdits diaphragmes;

C. on assemble les anneaux entre les bords internes de chaque paire de diaphragmes;

D. on relie les anneaux uniquement avec les bords internes de chacun des deux diaphragmes opposés qui se font face l'un l'autre dans des paires adjacentes de diaphragmes, et

E. on relie les rebords externes des diaphragmes adjacents de chaque paire au ras les uns des autres de façon à former une suite de circonvolutions (26), avec chaque circonvolution constituée de deux diaphragmes, de telle sorte que:

lorsque la capsule est totalement comprimée, les diaphragmes de chaque paire soient en contact les uns avec les autres sur la totalité de leurs surfaces, en établissant ainsi un support mutuel, et les rebords externes des diaphragmes adjacents sont ainsi aptes à être en contact l'un avec l'autre,

ce grâce à quoi la capsule est ainsi apte à résister à des pressions externes relativement élevées.

FIG.1

FIG.2

FIG.3

PRIOR ART

FIG.4